## Europäisches Patentamt

## European Patent Office

## Office européen des brevets

(19)

(11) Numéro de publication: **0 033 430**
**B1**

(12)

# FASCICULE DE BREVET EUROPEEN

(45) Date de publication du fascicule du brevet:
09.11.83

(51) Int. Cl.³: **B 41 M 5/26**, B 23 K 26/00,
G 11 B 7/24

(21) Numéro de dépôt: 80401854.7

(22) Date de dépôt: 23.12.80

(54) Procédé d'inscription thermo-optique d'information et support d'information destiné à la mise en oeuvre de ce procédé.

(30) Priorité: 23.01.80 FR 8001423

(43) Date de publication de la demande:
12.08.81 Bulletin 81/32

(45) Mention de la délivrance du brevet:
09.11.83 Bulletin 83/45

(84) Etats contractants désignés:
DE GB IT NL SE

(56) Documents cités:
EP - A - 0 003 262
DE - A - 2 344 233
DE - A - 2 441 263
DE - B - 2 701 218
FR - A - 2 111 204
FR - A - 2 126 387
FR - A - 2 145 606
GB - A - 2 026 901
US - A - 3 171 744
US - A - 3 644 014

DERWENT JAPANESE PATANTS REPORT, vol. 7, no. 12,
30 avril 1968, part 3B, pages 7-8 Londres, GB
APPLIED PHYSICS LETTERS, vol. 26, no. 6, 15 mars
1975 H.J. Toile et al.: "Fast imaging process in PbI2
films", pages 349-351
PATENT ABSTRACTS OF JAPAN, vol. 3 no. 119, 6
october 1979, page 2E142

(73) Titulaire: THOMSON-CSF, 173, Boulevard Haussmann,
F-75379 Paris Cedex 08 (FR)

(72) Inventeur: Cornet, Jean, THOMSON-CSF
SCPI 173, Haussmann, F-75360 Paris Cedex 08 (FR)

(74) Mandataire: Wang, Pierre et al, THOMSON-CSF
SCPI 173, Bld Haussmann, F-75379 Paris Cedex 08 (FR)

BUNDESDRUCKEREI BERLIN

## Procédé d'inscription thermo-optique d'information et support d'information destine à la mise en oeuvre de ce procédé

La présente invention se rapporte à l'enregistrement par voie thermo-optique d'informations susceptibles d'être lues optiquement. Elle vise plus particulièrement un procédé d'inscription thermo-otpique utilisant un laser de faible puissance et un support thermosensible qui autorise d'une part la lecture des informations immédiatement après leur enregistrement sans étape intermédiaire de développement et d'autre part la copie de l'information par une méthode globale et rapide sans détérioration de la gravure originale ni modification de l'une quelconque des caractéristiques de la gravure au cours du processus de copie.

Les structure proposées pour l'inscription d'informations avec des lasers de faible puissance (typiquement inférieure à 15 mW) procèdent généralement par ablation thermique. C'est par exemple le cas des couches de tellure, de bismuth ou d'alliage chalcogénure vitreux et même de certaines couches métalliques déposées sur des sous-couches organiques thermodégradables. Le stockage des informations se fait sous forme de trous dans ces structures et les trous créent, au cours de la lecture, un contraste d'amplitude qui permet de détecter l'information. La copie de ces informations ne peut cependant être réalisée de façon globale simple et rapide, par exemple à l'aide du procédé de polymérisation qui consiste à obliger un liquide à pénétrer dans le creux du relief puis à le durcir par un moyen approprié (thermique ou photonique). Cette technique de duplication transforme le contraste d'amplitude de l'original en contraste de phase, c'est-à-dire que les copies ne peuvent être lues avec le même appareil de lecture que celui qui permet de lire l'original. Pour conserver à la copie un contraste d'amplitude, il est nécessaire d'utiliser une technique de type photographique ou holographique. La technique photographique présente en l'occurence de sérieux inconvénients dans la mesure où elle nécessite un excellent contact entre l'émulsion et la surface enregistrée de l'original, ce qui est généralement difficile à réaliser dans toute l'étendue des supports à mettre en contact, par suite des poussières. En outre, il est nécessaire d'opérer en chambre noire avec des instruments d'optique de grande qualité et d'utiliser des émulsions à résolution très élevée. D'autre part, la technique holographique nécessite des appareillages encombrants.

D'autres structures ont été développées par la demanderesse qui présentent la particularité d'offrir de meilleures caractéristiques d'empreinte en particulier du point de vue sensibilité d'inscription et rapport signal à bruit de lecture que les structures fonctionnant par ablation thermique. Ces structures sont constituées d'une couche métallique ductile recouvrant une couche organique fortement dilatable. L'absorption lumineuse dans la couche métallique au cours de l'impact du faisceau laser entraîne l'échauffement de la couche organique qui réagit à cet échauffement par une forte dilatation thermique locale sans changement d'état. Cette dilatation crée à son tour un étirement non réversible dans la couche métallique avec dépassement de la limite élastique, mais en restant en deça de l'allongement à la rupture. L'inconvénient essentiel de ce type de structure est que la forte dilatation thermique de la couche organique est généralement obtenue par adjonction à un polymère d'une quantité importante de plastifiant. Or celui-ci est un liquide qui se comporte comme un solvant et en conséquence fait chuter les propriétés mécaniques du polymère, en particulier sa dureté et son point de ramollissement. Il en résulte qu'un soin particulier doit être développé au cours du dépôt ultérieur de la couche métallique de façon à n'introduire aucune contrainte mécanique dans la couche organique qui soit susceptible en se relaxant d'altérer la morphologie de la structure aussi bien avant qu'après stockage de l'information. C'est pourquoi, la couche métallique doit être déposée à très faible vitesse, être parfaitement inoxydable, avoir une faible dureté, une faible rigidité mécanique et une faible adhérence à la couche organique. Il en résulte que le support d'information est difficilement manipulable sans précautions particulières. D'autre part, le dépôt d'une couche protectrice quelconque (résine thermo ou photodurcissable, vernis, etc.) n'est pas possible, car il entraîne systématiquement des contraintes susceptibles de dénaturer l'empreinte enrégistrée. Le seul système de protection acceptable est l'utilisation d'un capot ménageant un espace libre au dessus de la couche sensible, cependant ce capot multiplie quasiment par deux le prix de revient du support d'information. Enfin, les techniques de duplication directe par liquide polymérisable ou les techniques de photographie par contact ne sont pas envisageables pour réaliser des copies à partir d'une structure aussi fragile.

L'invention a pour objet un procédé d'inscription thermo-optique d'information consistant à échauffer superficiellement à l'aide d'un faisceau de rayonnement focalisé et modulé en intensité, un support d'information thermosensible comportant au moins une couche métallique qui recouvre une sous-couche organique, caractérisé en ce que l'énergie thermique dégagée dans la couche métallique par l'impact du faisceau provoque un dégagement gazeux par dégradation locale de la souscouche organique; ce dégagement gazeux et la perte d'adhérence associée créant dans la couche métallique un étirement situé au delà de la limite élastique et en deça de l'allongement de rupture du matériau ductile constituant cette couche métallique.

L'invention a également pour objet un support d'information comprenant une sous-couche organique recouverte d'au moins une couche métallique, caractérisé en ce que l'échauffement localisé de la couche métallique dans la zone d'impact d'un faisceau de rayonnement focalisé engendre un dégagement gazeux par dégradation locale de la sous-couche organique; ce dégagement gazeux et la perte d'adhérence qui en résulte provoquent un étirement plastique de la couche métallique qui se situe au delà de la limite élastique et en deçà de l'allongement de rupture du matériau ductile constituant cette couche métallique.

L'invention sera mieux comprise au moyen de la description ci-après et des figures annexées parmi lesquelles:

— la figure 1 représente un support d'information thermosensible et un faisceau d'inscription optique focalisé;

— la figure 2 représente une déformation du support de la figure 1 pendant la phase d'inscription;

— la figure 3 représente le relief obtenu à la surface du support de la figure 1 dans le cas d'une inscription réalisée sans perçage ni changement d'état;

— la figure 4 représente le relief obtenu à la surface du support de la figure 1 dans le cas d'une inscription réalisée conformément à l'invention;

— les figures 5 et 6 sont des diagrammes explicatifs;

— la figure 7 représente une première variante de réalisation du support d'information conforme à l'invention;

— la figure 8 représente un support d'information renforcé par un dépôt électrolytique conformément à l'invention;

— la figure 9 illustre l'aspect de la protection métallique de la figure 8 après rénovation des éléments du support perméables au rayonnement;

— la figure 10 illustre le processus de duplication applicable au support enregistré conforme à l'invention;

— la figure 11 illustre la protection par un capot du support d'information selon l'invention;

— la figure 12 montre une autre variante de réalisation du support d'information selon l'invention.

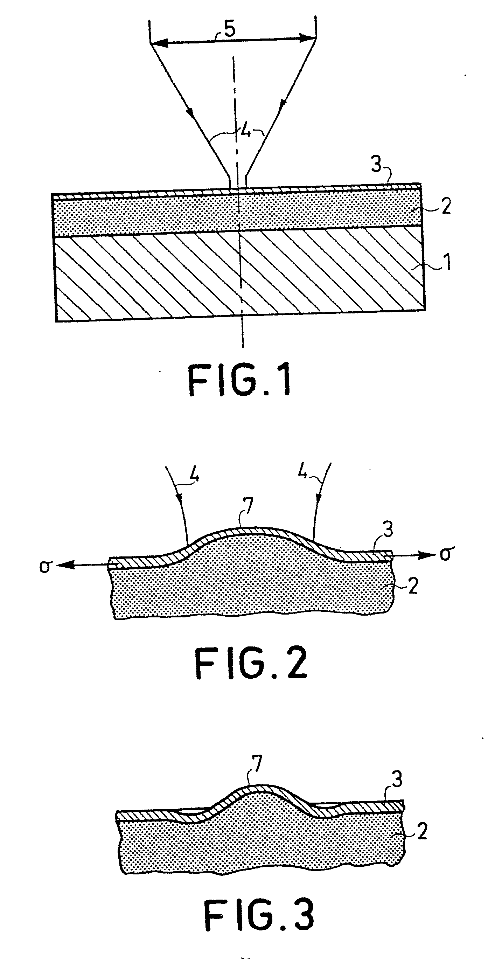

La figure 1 est une vue en coupe d'un support d'information inscriptible par voie thermo-optique au moyen de l'énergie rayonnée contenue dans un faisceau d'inscription 4 focalisé par une lentille 5. L'information à inscrire se présente généralement sous la forme d'un signal électrique modulé angulairement; ce signal module l'intensité du faisceau 4 par exemple par l'intermédiaire d'un modulateur optique à commande électrique non représenté sur la figure 1. L'énergie rayonnée est produite par une source de lumière cohérente, afin d'obtenir par focalisation à la surface du support d'information un spot de très faibles dimensions. Lorsque le spot se déplace à la surface du support dans une direction perpendiculaire au plan de la figure 1, une empreinte en relief se forme et elle se présente sous la forme d'une succession de protubérances de longuer et d'espacement non-uniformes. Ce relief matérialise une piste dont le contraste de phase est lisible optiquement. Il peut coexister un contraste d'amplitude, lorsque le relief obtenu provoque un amincissement de la structure du support, car cet effet mécanique, conséquence d'un étirement d'une couche mince, entraîne une variation de transmittance ou de réflectance optique.

Le support thermosensible de la figure 1 comprend un substrat 1 recouvert par une sous-couche 2 de substance organique, laquelle est recouverte à son tour par une couche métallique 3.

Sous l'impact du faisceau d'inscription 4, la couche métallique 3 s'échauffe localement du fait de l'absorption de l'énergie rayonnée et communique cet échauffement à la sous-couche 2. La figure 2 montre l'aspect que prend la surface du support d'information de la figure 1 du fait de l'échauffement de la souscouche 2. Lorsque cet échauffement n'occasionne aucun changement d'état ni dans la couche 3 ni dans la souscouche 2, on peut obtenir une empreinte permanente après le passage du faisceau d'inscription 4 en se basant sur une dilatation en coussinet 7 de la sous-couche 2 qui provoque dans la couche 3 un étirement $\sigma$ au delà de la limite élastique. La déformation résiduelle obtenue est illustrée sur la figure 3. L'empreinte en relief présente au centre un renflement 7 et ce renflement se raccorde aux parties non déformées de la couche 3 par une légère dépression annulaire qui résulte du rééquilibrage des contraintes. On peut noter que sur la figure 3 le matériau organique 2 de la sous-couche 2 reste en contact avec la couche 3. La déformation sans changement d'état qui vient d'être décrite est compatible avec une faible puissance du faisceau d'inscription et elle permet d'obtenir une empreinte de bonne lisibilité lorsqu'on met en oeuvre dans la sous-couche 2 un polymère fortement plastifié. Pour accroître la déformation permanente, compte tenu de la faible adhérence de la couche 3 sur la sous-couche 2, le métal utilisé présente une faible dureté. Il en résulte que le support d'information réalisé selon ces prescriptions est totalement dépourvu de tenue mécanique. En outre, le dépôt de la couche 3 sur la sous-couche 2 doit se faire à vitesse lente pour éviter toute contrainte susceptible de créer des plissements. La structure utilisant une couche tendre déposée sur une sous-couche de polymère fortement plastifié est sujette au perçage lorsqu'on atteint le seuil de puissance $E_V$ pour lequel la sous-couche se dégrade. Le perçage de la couche 3 entraîne l'apparition d'un rebord à contours peu reproductibles, ce qui abaisse le rapport S/B (signal à bruit) du signal de lecture de l'empreinte.

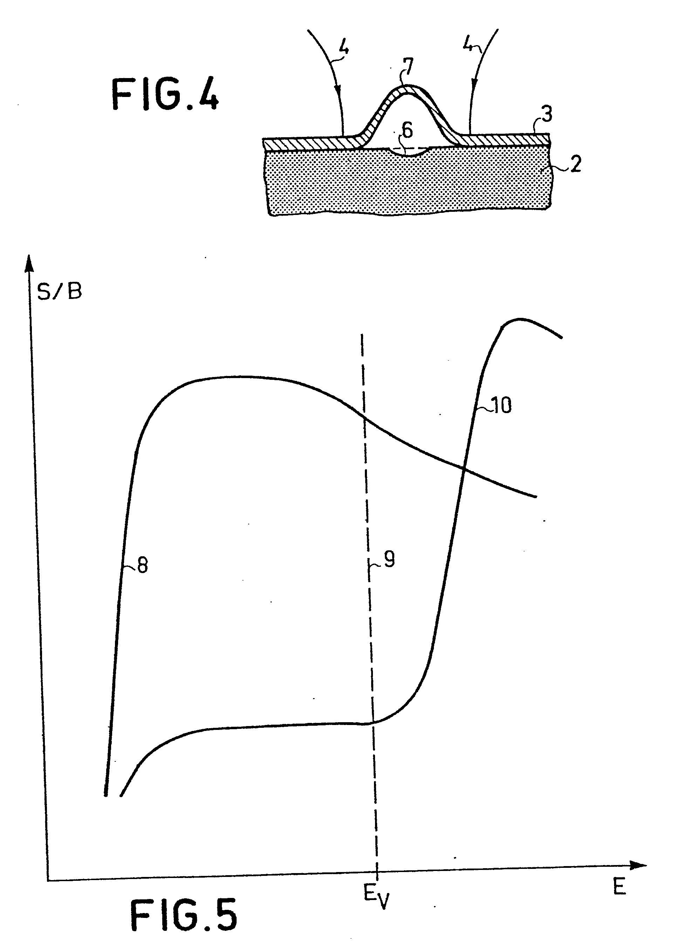

Conformément à l'invention, en vue d'obtenir une empreinte en relief sans perçage de la couche 3 qui soit susceptible d'une meilleure tenue mécanique, on sélectionne un métal adhérant mieux à la sous-couche 2 et on adopte pour celle-ci un matériau polymère peu ou pas plastifié. L'étirement au delà de la limite d'élasticité de la couche 3 est dû en majeure partie à la formation d'une bulle gazeuse obtenue par dégradation locale de la sous-couche 2. L'empreinte réalisée selon ces prescriptions est représentée sur la figure 4, où l'on voit que la couche 3 s'est décollée de la souscouche 2 du fait de la dégradation localisée de la sous-couche 2 avec formation du cratère 6.

Le diagramme de la figure 5 illustre les caractéristiques de réponse des deux types de supports d'informations évoqués ci-dessus; ils se différencient par leurs sensibilités au rayonnement d'inscription et par leurs résistances mécaniques. On a porté en abscisse la puissance E du faisceau d'inscription et en ordonnée le rapport signal à bruit S/B que la lecture de l'empreinte permet d'obtenir. Dans le cas d'un support d'information constitué d'une sous-couche 2 en polymère fortement plastifié recouverte d'une couche 3 en métal précieux à adhérence modérée et relativement tendre, on obtient la caractéristique de réponse 8. En deçà du seuil de puissance $E_V$ qui conduit à une dégradation de la sous-couche 2, donc à gauche de la ligne pointillée 9, on constate qu'une empreinte de bonne lisibilité peut être obtenue avec une faible puissance d'inscription. Au franchissement du seuil de dégradation $E_V$ la caractéristique 8 s'infléchit, car la dégradation de la sous-couche 2 se solde par un perçage inévitable de la couche métallique 3.

La caractéristique de réponse 10 se rapporte à un support d'information conforme à l'invention qui présente une moindre sensibilité à l'inscription, mais qui offre une bien meilleure tenue mécanique. Ce support comporte une sous-couche 2 peu ou pas plastifiée et une couche métallique 3 plus dure et plus adhérente grâce à l'incorporation d'un élément approprié. La partie de la caractéristique 10 située à gauche de la ligne 9 indique un rapport signal à bruit de lecture faible, car le relief de l'empreinte est beaucoup moins marqué qu'avec le support d'information auquel se rapporte la caractéristique 8. Ceci résulte du plus faible coefficient de dilatation du polymère et du relèvement de la limite d'élasticité de la cauche métallique 3.

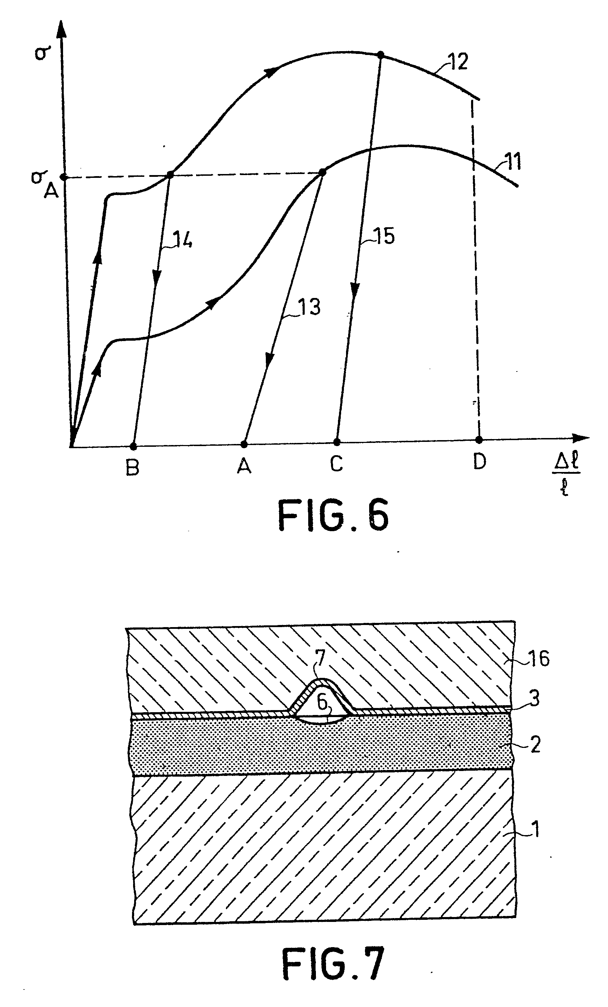

La figure 6 permet de comparer les courbes allongements-tension des métaux constituant la couche 3 des deux types de supports d'information ayant respectivement les caractéristiques de réponse 8 et 10 de la figure 5. L'allongement proportionnel est donné en abscisse sur le diagramme de la figure 6; en ordonnée, on a porté la tension mécanique $\sigma$.

La courbe 11 se rapporte à une couche métallique tendre réalisée en alliage précieux sans adjuvant. Un étirement important au delà de la limite élastique peut être obtenu avec une tension mécanique $\sigma_A$. La ligne de déchargement 13 rencontre en A l'axe de tension nulle, ce qui permet de compter sur un relief d'empreinte important, car l'allongement permanent OA est sensible. Un tel étirement justifie le bon rapport signal à bruit obtenu malgré l'absence de dégradation de la sous-couche 2 dans le cas de la caractéristique 8 de la figure 5.

La courbe 12 se rapporte à une couche métallique 3 de plus grande dureté. La même tension mécanique $\sigma_A$ dépasse à peine la limite élastique située plus haut et la ligne de déchargement 14 montre que l'étirement plastique a donné lieu à un faible allongement permanent OB. Cette situation correspond à la partie de la caractéristique 10 de la figure 5 située à gauche de la ligne 9. Conformément à l'invention, on exploite la partie de la caractéristique 10 qui se situe à droite de la ligne 9. La dégradation de la sous-couche 2 provoque le décollement localisé de la couche métallique 3 et le volume gazeux dégagé provoque un étirement plastique supplémentaire qui peut rester en deçà de l'allongement de rupture OD de la couche métallique. On obtient donc selon la ligne de déchargement 15 un allongement permanent OC qui garantit un excellent rapport signal à bruit de lecture comme en témoigne la partie de la caractéristique 10 située à droite de la ligne 9.

D'après les diagrammes des figures 5 et 6, on voit que tout en exploitant un étirement plastique sans perçage de la couche métallique 3, on opère différemment au niveau de la sous-couche 2 puisque celle-ci provoque l'étirement soit par simple dilatation sans changement d'état, soit par une dégradation thermique locale fournissant l'essentiel du travail de déformation de la couche métallique.

Selon le procédé d'inscription conforme à l'invention, on aboutit à l'empreinte de la figure 4 dont le relief important est engendré grâce à la dégradation thermique de la sous-couche organique 2 et dont le maintien correspond à l'étirement plastique sans perçage de la couche métallique 3.

Selon le procédé d'inscription conforme à l'invention, on aboutit à l'empreinte de la figure 4 dont le relief important est engendré grâce à la dégradation thermique de la sous-couche organique 2 et dont le maintien correspond à l'étirement plastique sans perçage de la couche métallique 3.

Le support d'information approprié à la mise en oeuvre de ce procédé d'inscription comporte une sous-couche 2 d'un matériau organique thermodégradable ayant une épaisseur de l'ordre de 10 à 300 nm et cette sous-couche (2) est recouverte d'une fine couche métallique 3 ayant une épaisseur de l'ordre de 5 à 10 nm. Le substrat 1 peut être quelconque, métallique, vitreux ou organique, opaque ou transparent, souple ou rigide, d'épaisseur également quelconque. A titre d'exemple non limitatif, le substrat 1 est transparent et rigide et a une épaisseur comprise entre 1 et 1,5 mm. La sous-couche organique 2 est choisie de préférence avec une température de dégradation faible, une dureté élevée et une faible compressibilité, de façon que la déformation provenant de la dégradation du polymère reste confinée à la zone d'impact du faisceau laser. La couche métallique 3 remplit plusieurs fonctions. Elle sert à absorber le rayonnement incident pour le convertir en énergie thermique. D'autre part, elle doit confiner sous l'impact laser la bulle créée par la dégradation du polymère, ce qui implique qu'elle soit parfaitement continue (sans fissures, cratères . . . ) et très adhérente à la sous-couche organique. Enfin elle doit présenter une ductilité et une dureté élevées de façon à subir une déformation importante sous la pression créée par la bulle gazeuse sans qu'il y ait rupture ou perçage d'aucune sorte. Etant donné que la déformation peut présenter une amplitude très importante (jusqu'à environ 300 nm) sans formation de trou ni bourrelet, on obtient un bon rapport signal à bruit lors de la lecture. Le procédé d'inscription par dégradation est applicable à la quasi totalité des polymères thermoplastiques dégradables à basse température.

Le choix prend cependant en considération la facilité de dépôt en couche mince ou semi épaisse sur de grandes surfaces, la qualité microscopique de la couche: continuité, absence de granulation ou autres défauts, sa transparence et son adhérence au substrat. A titre d'exemple non limitatif, on peut adopter pour la sous-couche organique 2 le polyméthacrylate de méthyle, le polystyrène, les polycarbonates, le polysulfone, les dérivés de la cellulose (nitrocellulose, acétate de cellulose, éthylcellulose, acétobutyrate de cellulose). Ces substances peuvent dans certains cas être obtenues dans le commerce sous forme de feuilles minces ou épaisses si bien que c'est le substrat 1 lui-même qui joue le rôle de couche thermodégradable. Dans tous les cas ces substances peuvent aussi être déposées sur un substrat 1, par tirage ou par centrifugation à partir de solutions dans des solvants simples (acétone, cyclohexanone, butyle acétate ou le mélange de solvants défini sous l'appellation »AZ thinner« par la firme SHIPLEY. D'autres méthodes de dépôt sont également utilisables telles que la sublimation sous vide ou la pulvérisation cathodique. D'autre part il peut être intéressant d'ajouter au polymère un adjuvant susceptible de diminuer la température pour laquelle une émission gazeuse se produit, donc d'améliorer la sensibilité. Il en est ainsi de certains plastifiants comme les adipates, azélates et sébacates d'isodécyl, de butoxyéthyl ou d'éthylhexyl, ou les phthalates d'isodécyl, de cyclohexyl ou d'éthylhexyl.

Pour la réalisation de la couche métallique 3, les métaux sont choisis en fonction de leur ductilité, de leur résistance au choc de déformation, de leur dureté, de leur caractère peu oxydable et de la possibilité qu'ils présentent de pouvoir réaliser des couches minces parfaitement continues et adhérentes au polymère. La ductilité et la résistance au choc sont généralement obtenues avec les alliages à base d'or, d'argent ou de platine en phase homogène. La dureté el l'adhérence sont obtenues en choisissant comme élément d'addition l'un quelconque des éléments Cu, Cr, Ni, Al, Sb, Ta, Ti, Mn, Si, Zr, Co, Pd dans la mesure où la teneur en métal précieux reste supérieure ou égale à 60% en poids de façon que l'alliage conserve une grande résistance à l'oxydation et reste en phase homogène de grande ductilité. C'est ainsi que les alliages dentaires Ag—Pd—Cu sont utilisables. En outre, d'autres éléments d'addition peuvent être utilisés sans sortir du cadre de l'invention. D'autre part, on peut aussi utiliser des alliages non précieux comme les bronzes d'alluminium (par exemple $Cu_{70}$, $Fe_{7,5}$, $Al_{22,5}$) ou les bronzes d'étain (par exemple $Cu_{70}$, $Sn_5$, $Pb_{25}$) ainsi que les alliages Cu—Ni, Cu-Pd et Ni-Pd qui sont connus pour présenter une grande résistance à l'oxydation et néanmoins des propriétés mécaniques intéressantes dans le cadre de cette invention. A titre d'exemple non limitatif, la demanderesse a obtenu d'excellents résultats avec l'alliage $Cr_{20}$ $Au_{80}$ (en poids). Tous ces métaux permettent la réalisation de couches minces par évaporation sous vide et ces couches ont un pouvoir absorbant connu de 50% pour le rayonnement incident lorsque l'épaisseur de ces couches est comprise entre 4 et 10 nm. Par ailleurs, un recuit en atmosphère oxydante (par exemple à 55°C pendant 48 h) permet dans certains cas, comme dans celui des alliages Cu-Au, d'augmenter considérablement la dureté et l'adhérence des couches métalliques sans dégrader notablement leur ductilité.

Un des avantages de l'invention est que l'adhérence de la couche métallique au polymère et l'existence d'un important gradient thermique radial tend à confiner la bulle gazeuse au centre du spot d'inscription, c'est-à-dire à donner une déformation de taille bien inférieure à celle du spot d'inscription. Cette taille peut être aussi faible que 0,3 μm tout en conduisant à un rapport signal à bruit supérieur à 50 db. Il en résulte une fonction de transfert présentant une fréquence de coupure rejetée à haute fréquence. D'autre part la taille de la gravure ainsi que le rapport signal à bruit varient rapidement en fonction de la puissance du faisceau d'inscription comme le montre la caractéristique 10 de la figure 5. Il en résulte la possibilité de stocker l'information sur plusieurs niveaux en agissant sur la puissance (on n'est limité que par la puissance disponible, car il n'y a jamais formation de trous).

D'autre part, l'effet de réduction d'épaisseur de la couche métallique consécutive à sa déformation plastique peut être mis à profit pour lire l'information contenue dans l'empreinte par la diminution locale de réflectance et par l'augmentation corrélative de transmittance. On dispose donc d'un contraste d'amplitude qui vient compléter le contraste de phase lié au relief de l'empreinte. Bien que l'épaisseur de la couche métallique soit faible, sa dureté et la rigidité mécanique du polymère permettent une manipulation aisée du support d'information en utilisant uniquement des précautions élémentaires en particulier pour la protection contre les poussières et les traces de doigts. Dans ces conditions, la durée de vie de la structure est très élevée. Il peut cependant être utile de protéger plus complètement l'information contenue dans la couche sensible.

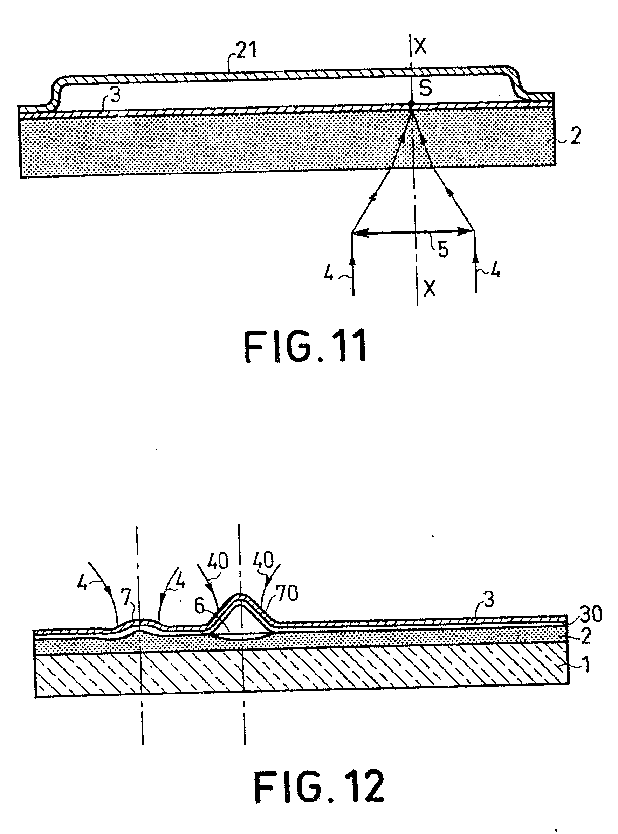

La figure 11 montre une réalisation classique de cette protection utilisant un capot 21 que ménage un espace vide au dessus de la couche métallique 3. L'inscription peut se faire au moyen d'un faisceau lumineux 4 que traverse le substrat, ici constitué par la sous-couche 2 et focalisé sur la couche métallique 3 par une lentille 5 d'axe optique XX. Le capot de protection 21 peut être perméable au rayonnement d'inscription et le substrat peut être opaque si la lecture se fait par réflexion. Pour une lecture par transmission, les deux éléments donnant accès à la couche métallique 3 doivent être perméables au rayonnement de lecture.

Cependant des méthodes de protection plus simples et moins onéreuses peuvent être utilisées. Comme le montre la figure 7, la couche sensible 3 peut, en effet, être protégée sans être dégradée en aucune façon, grâce à une couche épaisse 16 de résine photo ou thermopolymérisable, un vernis ou un polymère déposé par voie humide (tirage, centrifugation ... ) ou par voie sèche (sublimation, pulvérisation cathodique). Cette couche 16 peut être déposée aussi bien avant qu'après inscription dans la mesure où sa dureté n'est pas trop élevée pour s'opposer à la croissance de la déformation sous l'impact du faisceau laser. A titre d'exemple non limitatif la couche 16 est un silicone thermo-durcissable du type Sylgard 184 de la société DOW CORNING, une laque acrylique photopolymérisable, ou une couche de nitrocellulose déposée par centrifugation à partir d'une solution à 100 g/l d'AZ Thinner de la société SHIPLEY. On peut noter que la protection par couche épaisse qui est décrite ici est efficace non seulement pour protéger la couche sensible 3 des dégradations mécaniques éventuelles, mais elle le protège également contre la corrosion dans la mesure où la couche métallique 3 n'est pas parfaitement inoxydable, ce qui est le cas des alliages Cu-Au à teneur très élevée en cuivre.

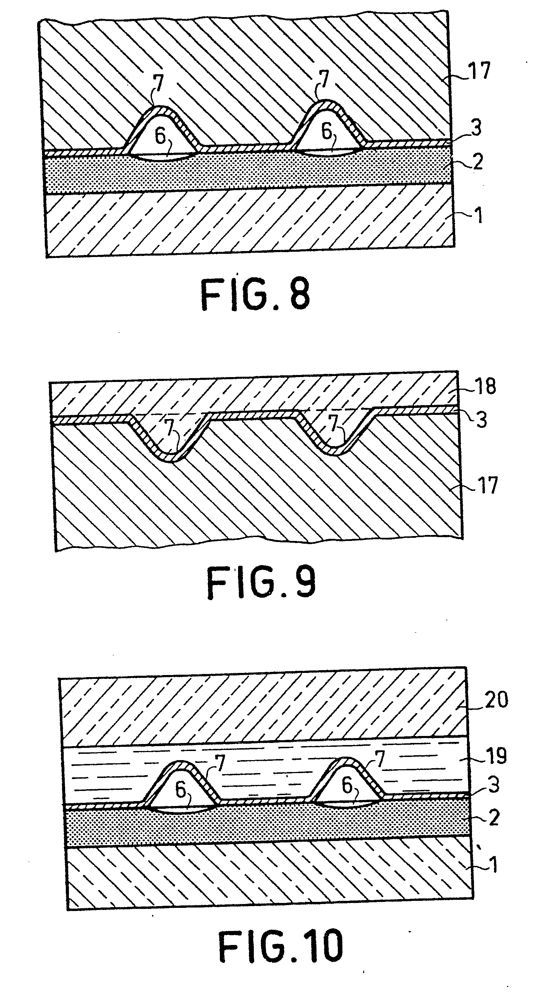

Sur la figure 8 on peut voir un autre mode de protection qui consiste à déposer sur le support d'information enregistré une couche de métal 17. Ce dépôt peut être effectué la couche métallique 3 par électrolyse d'un métal à grande résistance mécanique et chimique par par exemple le nickel. A la différence des structures gravées par ablation, la structure qui fait l'objet de l'invention peut être recouverte d'une couche métallique épaisse 17 sans pour autant que le relief disparaisse puisqu'il est toujours lisible à travers le substrat 1. La configuration définie par le support d'information protégé par une couche métallique épaisse 17 dans le cadre de cette invention est une structure particulièrement satisfaisante lorsqu'un archivage de très longue durée est souhaité. On peut noter d'autre part qu'une dégradation du substrat 1 n'est pas préjudiciable à la lecture de l'information dans la mesure où le substrat endommagé et la sous-couche 2 peuvent être ôtés par dissolution dans un solvant approprié et remplacés par une couche protectrice neuve 18, par exemple une résine photopolymérisable comme illustré sur la figure 9.

Dans cette opération, la gravure solidaire de la couche métallique épaisse 17 n'est pas détériorée. Avant archivage suivant le processus qui vient d'être décrit, le relief peut être copié une ou plusieurs fois par un processus de contact.

La figure 10 illustre le processus de copie globale de la gravure par l'intermédiaire d'un liquide 19 photo ou thermo-polymérisable. La copie peut être réalisée sur support plastique rigide ou souple 20. Dans l'opération de copie, le support d'information est enduit d'une couche du liquide 19, puis le support 20 de la copie est plaqué contre la couche liquide 19 à l'aide d'un dispositif permettant d'obtenir un film liquide continu sans bulles gazeuses ou autres défauts et d'épaisseur uniforme. Après irradiation à l'aide d'une lampe à ultra violet dans un sens ou dans l'autre ou après traitement thermique, la résine polymérisée 19 adhère préférentiellement au support 20 de la copie, ce qui permet une séparation complète de la copie 19—20 de l'original 1-2-3 sans qu'il en résulte une quelconque dégradation soit de la copie soit de l'original, celui-ci peut alors être de nouveau utilisé soit pour une inscription complémentaire soit pour une nouvelle copie.

Un exemple typique de réalisation d'un support d'information conforme à l'invention pourrait avoir les caractéristiques suivantes: le substrat 1 est constitué d'un disque en polyméthacrylate de méthyle de 356 mm de diamètre et de 1,5 mm d'épaisseur. Ce substrat 1 est recouvert d'une sous-couche 2 de nitrocellulose de 500 nm d'épaisseur déposée par centrifugation à la vitesse de 6 tours · s$^{-1}$ à partir d'une solution à 8 g de nitrocellulose par litre de AZ Thinner. Après évaporation du solvant la sous-couche organique 2 est recouverte d'une couche 3 d'un alliage $Cr_{20} Au_{80}$ (en poids) d'épaisseur voisine de 8 nm par évaporation sous vide à la vitesse de 0,3 nm · s$^{-1}$. L'inscription du support d'enregistrement est effectuée au travers du substrat 1 avec un faisceau provenant d'un laser Hélium-Néon ($\lambda = 633$ nm) modulé à la fréquence de 2 MHz. L'objectif de projection utilisé possède une ouverture numérique de 0,45. Le disque étant entraîné à la vitesse de 25 tours · s$^{-1}$ et l'inscription se faisant selon un rayon de 130 mm, on a obtenu une succession d'empreintes de 0,4 μ de large de 2,5 μm de long avec un relief haut de 150 nm lorsque la puissance incidente était 8 mW. Avec un tel support enregistré, le signal de lecture mesuré à l'analyseur de spectre et rapporté au bruit optique se situe à un niveau de 64 db pour une bande de 30 kHz. Le relief a pu être copié par photopolymérisation d'un liquide acrylique sur un support rigide 20 en polyméthyl méthacrylate à l'aide d'une lampe UV de puissance 100 w située à une distance de 18 cm. La durée d'irradiation a été 12 secondes. La lecture sur une machine de type conventionnel n'a pas permis de noter une quelconque dégradation du signal de lecture aussi bien pour l'original que pour la copie.

Sur la figure 12, on peut voir une variante de réalisation du support d'information conforme à l'invention.

Le substrat 1 porte une sous-couche organique plastifiée 2 recouverte successivement d'une souscouche métallique 30 par exemple en or, laquelle est à son tour recouverte d'une couche métallique 3 plus dure, La sous-couche métallique 30 permet d'obtenir de faibles contraintes lors du dépôt sur une sous-couche organique 2 assez fortement plastifiée. La couche métallique 3 peut alors être déposée en prenant moins de précautions. Une telle structure permet d'envisager un procédé de gravure en deux phases. Dans un premier temps, on réalise au moyen d'un faisceau d'inscription 4 qui ne dégrade pas la sous-couche 2, une empreinte en relief continue matérialisant une prépiste. Dans un deuxième temps le relief 7 de cette prépiste est gravé avec un faisceau 40 modulé par l'information, ce qui l'amplifie grâce à la dégradation de la sous-couche 2. On obtient ainsi une succession de protubérances ayant un relief 70 plus accusé que celui de la prépiste. La réalisation d'une prépiste par dégradation de la sous-couche 2 est également compatible avec l'inscription à postériori de l'information.

L'utilisation d'une prépiste peut se concevoir de deux manières différentes. On peut enregistrer l'information selon une piste disposée à côté de la prépiste ou bien enregistrer l'information par dessus la prépiste. La prépiste peut mettre en oeuvre une légère dégradation de la sous-couche organique ou encore une simple dilatations sans changement d'état de la sous-couche organique.

Bien que l'on ait décrit dans ce qui précède et représenté sur les dessins les caractéristiques essentielles de la présente invention appliquée à des modes de réalisation préférés de celle-ci, il est évident que l'homme de l'art peut y apporter toute modification de forme ou de détail qu'il juge utile sans pour autant sortir du cadre de l'invention. En particulier, le dépôt d'une couche très mince, quelques nm de chrome, nickel, platine ou cuivre sur la couche sensible 3 avant ou après gravure dans le but d'augmenter la dureté de la couche métallique 3 et, partant, le nombre de copies réalisables à partir d'un même original, ne sort pas du cadre de cette invention. D'autre part, la couche métallique 3 peut avantageusement être constituée de l'un des alliages suivants:

| éléments | exemple |
|----------|---------|
| Cd—Sb | $Cd_{18}Sb_{82}$ |
| Mg—Sb | $Mg_{17}Sb_{83}$ |
| Al—Sb | $Al_{33}Sb_{67}$ |
| Cd—Cr | $Cd_{17}Cr_{83}$ |
| Mg—Cr | $Mg_{17}Cr_{83}$ |
| Al—Cr | $Al_{33}Cr_{67}$ |

## Revendications

1. Procédé d'inscription thermo-optique d'information consistant à échauffer superficiellement à l'aide d'un faisceau de rayonnement focalisé et modulé en intensité un support d'information thermosensible comportant au moins une couche métallique (3) qui recouvre un sous-couche organique (2), caractérisé en ce que l'énergie thermique dégagée dans la couche métallique (3) par l'impact du faisceau (4) provoque un dégagement gazeux par dégradation locale de la sous-couche organique (2); ce dégagement gazeux et la perte d'adhérence associée créant dans la couche métallique (3) un étirement situé audelà de la limite élastique et en-deça de l'allongement de rupture (D) du matérieu ductile constituant cette couche métallique (3).

2. Procédé d'inscription selon la revendication 1, caractérisé en ce que la sous-couche organique (2) est faite d'un polymère thermoplastique jouant le rôle de substrat.

3. Procédé d'inscription selon l'une quelconque des revendications 1 et 2, caractérisé en ce que deux phases d'inscription se succèdent en vue de créer un premier relief permanent et en se guidant sur ce premier relief permanent d'établir un second relief permanent.

4. Procédé d'inscription selon l'une quelconque des revendications 1 à 3, caractérisé en ce que la couche métallique (3) est renforcée, après inscription, par un dépôt.

5. Procédé d'inscription selon la revendication 4, caractérisé en ce que ce dépôt est un dépôt électrolitique (17) d'épaisseur suffisante pour servir de support définitif à la couche métallique (3).

6. Procédé d'inscription selon la revendication 5, caractérisé en ce que la sous-couche (3) et son support primitif sont enlevés et remplacés oar une couche protectrice (18).

7. Procédé d'inscription selon l'une quelconque des revendications 1 à 4, caractérisé en ce que la couche métallique (3) sert après inscription au report d'une empreinte; ce report d'empreinte étant effectué au moyen d'une couche fluide (19) de matériau polymérisable.

8. Procédé d'inscription selon l'une quelconque des revendications 1 à 4, caractérisé en ce que l'empreinte inscrite dans la couche métallique (3) est protégée par un capot (21).

9. Support d'information destiné à la mise en oeuvre du procédé d'inscription selon l'une quelconque des revendications précédentes, comprenant une souscouche organique (2) recouverte d'au moins une couche métallique (3), caractérisé en ce que l'échauffement localisé de la couche métallique (3) dans la zone d'impact d'un faisceau de rayonnement focalisé (4) engendre un dégagement gazeux par dégradation locale (6) de la sous-couche organique (2); ce dégagement gazeux et la perte d'adhérence qui en résulte provoquant un étirement plastique de la couche métallique (3) qui se situe au-delà de la limite élastique et en deça de l'allongement de rupture (D) du matériau ductile constituant cette couche métallique (3).

10. Support d'information selon la revendication 9, caractérisé en ce que la couche organique (2) est constituée par au moins un polymère; la couche métallique (3) étant faite d'un alliage comprenant des métaux précieux du groupe: or, argent, platine et un adjuvant visant à augmenter l'adhérence vis-à-vis de la couche organique et la résistance au choc de déformation; cet adjuvant étant choisi parmi les éléments suivants: cuivre, chrome, nickel, aluminium, antimoine, tantale, titane, zirconium, cobalt, palladium, manganèse, silicium.

11. Support d'information selon la revendication 9, caractérisé en ce que la couche organique (2) est constituée par au moins un polymère; la couche métallique (3) étant constituée par l'un des alliages suivants : bronze d'aluminium, bronze d'étain, alliages cuivre-nickel, cuivre-palladium, nickel-palladium, cadmium-antimoine, magnésium-antimoine, aluminium-antimoine, cadmium-chrome, magnésium-chrome et aluminiumchrome.

12. Support d'information selon l'une quelconque des revendications 10 et 11, caractérisé en ce que le polymère appartient au groupe comprenant les polyméthacrylates, les polycarbonates, le polystyrène, les dérivés de la cellulose, le polysulfone.

13. Support d'information selon la revendication 12, caractérisé en ce que le polymère est plastifié de façon à abaisser sa température de dégradation.

14. Support d'information selon la revendication 13, caractérisé en ce que le plastifiant incorporé au polymère est un adipate, azelate, sébacate d'isodecyl, de butoxyethyl ou d'éthylhexyl ou un phthalate d'isodecyl, de cyclohexyl ou d'éthylhexyl.

15. Support d'information selon l'une quelconque des revendications 13 et 14, caractérisé en ce que la couche métallique (3) est séparée de la sous-couche organique (2) par une sous-couche métallique intermédiaire (30).

16. Support d'information selon l'une quelconque des revendications 9 à 15, caractérisé en ce qu'il comporte des moyens de protection de la couche métallique (3).

17. Support d'information selon la revendication 16, caractérisé en ce que l'un de ces moyens consiste en un dépôt électrolytique épais de métal effectué après inscription d l'information.

18. Support d'information selon la revendication 9, caractérisé en ce que la couche métallique (3) est recouverte d'un dépôt de métal qui coopère avec celle-ci en vue de former une empreinte résistante.


**Patentansprüche**

1. Verfahren zum thermo-optischen Niederschreiben einer Information, bei dem ein wärmeempfindlicher Informations-Träger, der mindestens eine eine organische Unterschicht (2) bedeckende Metallschicht (3) aufweist, oberflächlich mit Hilfe eines fokalisierten und intensitätsmodulierten Strahlenbündels erhitzt wird, dadurch gekennzeichnet, daß die sich in der Metallschicht (3) durch das Auftreffen des Strahlenbündels (4) entwickelnde Wärmeenergie eine Freisetzung von Gas durch örtliche Zersetzung der organischen Unterschicht (2) verursacht, wobei diese Freisetzung von Gas und der damit verbundene Verlust an Haftwirkung in der Metallschicht (3) eine Dehnung erzeugt, die die Elastizitätsgrenze übersteigt, aber unterhalb der Bruchlängung (D) des duktilen Materials bleibt, das diese Metallschicht (3) bildet.

2. Verfahren zum Niederschreiben nach Anspruch 1, dadurch gekennzeichnet, daß die organische Unterschicht (2) aus einem thermoplastischen Polymer besteht, das die Rolle eines Substrats spielt.

3. Verfahren zum Niederschreiben nach einem beliebigen der Ansprüche 1 und 2, dadurch gekennzeichnet, daß zwei Niederschreibphasen aufeinanderfolgen, um ein erstes dauerhaftes Relief zu erzeugen und um ein zweites dauerhaftes Relief zu bilden, wobei man sich von diesem ersten Relief leiten läßt.

4. Verfahren zum Niederschreiben nach einem beliebigen der Ansprüche 1 bis 3, dadurch gekennzeichnet, daß die Metallschicht (3) nach dem Schreibvorgang durch einen Überzug verstärkt wird.

5. Verfahren zum Niederschreiben nach Anspruch 4, dadurch gekennzeichnet, daß dieser Überzug ein elektrolytischer Überzug (17) ist, dessen Dicke ausreicht, um als endgültiger Träger der Metallschicht (3) zu dienen.

6. Verfahren zum Niederschreiben nach Anspruch 5, dadurch gekennzeichnet, daß die Unterschicht (3) und ihr ursprünglicher Träger entfernt und durch eine Schutzschicht (18) ersetzt werden.

7. Verfahren zum Niederschreiben nach einem beliebigen der Ansprüche 1 bis 4, dadurch gekennzeichnet, daß die Metallschicht (3) nach dem Niederschreiben für die Übertragung eines Abdrucks verwendet wird, wobei diese Übertragung des Abdrucks mittels einer flüssigen Schicht (19) aus polymerisierbarem Material geschieht.

8. Verfahren zum Niederschreiben nach einem beliebigen der Ansprüche 1 bis 4, dadurch gekennzeichnet, daß der in die Metallschicht eingeprägte Abdruck durch eine Haube (21) geschützt wird.

9. Informationsträger für die Anwendung des Schreibverfahrens nach einem beliebigen der vorstehenden Ansprüche, der eine organische Unterschicht (2) aufweist, die mit mindestens einer Metallschicht (3) bedeckt ist, dadurch gekennzeichnet, daß die örtliche Erwärmung der Metallschicht (3) in dem Auftreffbereich eines fokalisierten Strahlenbündels (4) eine Freisetzung von Gas durch lokale Zersetzung (6) der organischen Unterschicht (2) hervorruft, wobei dieses Freisetzen von Gas und der daraus entstehende Verlust an Haftwirkung eine plastische Dehnung der Metallschicht (3) hervorrufen, die oberhalb der Elastizitätsgrenze und unterhalb der Bruchlängung (D) des duktilen Materials liegt, das diese Metallschicht (3) bildet.

10. Informationsträger nach Anspruch 9, dadurch gekennzeichnet, daß die organische Schicht (2) aus mindestens einem Polymer besteht, wobei die Metallschicht (3) aus einer Legierung besteht, die Edelmetalle der Gruppe Gold, Silber, Platin und ein Adjuvans aufweist, das die Haftfähigkeit gegenüber der organischen Schicht und die Widerstandsfähigkeit gegen den Verformungsschock erhöhen soll, und wobei dieses Adjuvans aus den Elementen Kupfer, Chrom, Nickel, Aluminium, Antimon, Tantal, Zirkonium, Kobalt, Palladium, Mangan, Silizium ausgewählt wird.

11. Informationsträger nach Anspruch 9, dadurch gekennzeichnet, daß die organische Schicht (2) aus mindestens einem Polymer besteht, wobei die Metallschicht (3) aus einer der Legierungen Aluminiumbronze, Zinnbronze, Kupfer-Nickel, Kupfer-Palladium, Nickel-Palladium, Kadmium-Antimon, Aluminium-Antimon, Kadmium-Chrom, Magnesium-Chrom und Aluminium-Chrom besteht.

12. Informationsträger nach einem beliebigen der Ansprüche 10 und 11, dadurch gekennzeichnet, daß das Polymer zu der Gruppe gehört, die die Polymethacrylate, die Polycarbonate, das Polystyren, die Derivate der Cellulose, das Polysulfon umfaßt.

13. Informationsträger nach Anspruch 12, dadurch gekennzeichnet, daß das Polymer plastifiziert wird, um seine Zersetzungstemperatur zu senken.

14. Informationsträger nach Anspruch 13, dadurch gekennzeichnet, daß der dem Polymer zugesetzte Weichmacher ein Adipat, Azelat, Isodecyl-, Butoxyäthyl- oder Äthylhexyl-Sebacat oder ein Isodecyl-, Cyclohexyl- oder Äthylhexyl-Phthalat ist.

15. Informationsträger nach einem beliebigen der Ansprüche 13 und 14, dadurch gekennzeichnet, daß die Metallschicht (3) durch eine metallische Zwischenschicht (30) von der organischen Unterschicht (2) getrennt ist.

16. Informationsträger nach einem beliebigen der Ansprüche 9 bis 15, dadurch gekennzeichnet, daß er Mittel zum Schutz der Metallschicht (3) aufweist.

17. Informationsträger nach Anspruch 16, dadurch gekennzeichnet, daß eines dieser Mittel aus einer dicken elektrolytischen Ablagerung von Metall besteht, die nach dem Niederschreiben der Information aufgebracht wird.

18. Informationsträger nach Anspruch 9, dadurch gekennzeichnet, daß die Metallschicht (3) von einer Metallablagerung bedeckt ist, die mit der Metallschicht zusammenwirkt, um einen widerstandsfähigen Abdruck zu bilden.

## Claims

1. A thermo-optical method to inscribe informations, consisting of the superficial application of heat, by means of a focussed and intensity-modulated beam of radiation, to a thermosensible information support comprising at least one metal layer (3) which covers an organic sublayer (2), characterized in that the thermal energy which is released in the metal layer (3) by the impact of the beam (4) provokes a gas release by the local deterioration of the organic sublayer (2), this gas release and the loss of adhesion associated therewith stretching the metal layer (3) to an extent which is situated above the elastic limit and below the rupture elongation (D) of the ductile material constituting said metal layer (3).

2. An inscription method according to claim 1, characterized in that the organic sublayer (2) is made of a thermoplastic polymer acting as a substratum.

3. An inscription method according to any one of the claims and 2, characterized in that two phases of inscription follow each other in order to create a first permanent relief and to establish a second permanent relief guided by this first permanent relief.

4. An inscription method according to any one of the claims 1 to 3, characterized in that the metal layer (3) is reinforced after inscription by a deposit.

5. An inscription method according to claim 4, characterized in that this deposit is an elektrolytic deposit (17) of sufficient thickness to serve as a definite support for the metal layer (3).

6. An inscription method according to claim 5, characterized in that the sublayer (3) und its primitive support are taken away and replaced by a protective layer (18).

7. An inscription method according to any one of the claims 1 to 4, characterized in that the metal layer (3) serves after inscription as carry-over of an imprint, this carry-over of the imprint being carried out by means of a fluid layer (19) of a material which is able to polymerize.

8. An inscription method according to any one of the claims 1 to 4, characterized in that the imprint inscribed into the metal layer (3) is protected by a cover (21).

9. An information support for carrying out the inscription method according to any one of the preceding claims, comprising an organic sublayer (2) covered by at least one metal layer (3), characterized in that the localized heating of the metal layer (3) in the impact area of a focussed beam of radiation (4) causes a gas release by local deterioration (6) of the organic sublayer (2), this gas release and the loss of adhesion which results therefrom provoking a plastic stretching of the metal layer (3) which stretching is situated above the elastic limit and below the rupture elongation (D) of the ductile material constituting this metal layer (3).

10. An information support according to claim 9, characterized in that the organic layer (2) is constituted by at least one polymer, the metal layer (3) being made of an alloy comprising precious metals of the group consisting of gold, silver, platinum, and an adjuvant intended to increase the adhesion to the organic layer and the resistance against the deformation shock, this adjuvant being chosen amongst the elements copper, chromium, nickel, aluminium, antimony, tantalum, titanium, zirconium, palladium, manganese, silicon.

11. An information support according to claim 9, characterized in that the organic layer (2) is constituted of at least one polymer, whereas the metal layer (3) is constituted by one of the alloys bronze of alluminium, bronze of tin, copper-nickel, copper-palladium, nickel-palladium, cadmium-antimony, magnesium-antimony, aluminium-antimony, cadmium-chromium, magnesiumchromium and aluminium-chromium.

12. An information support according to any one of the claims 10 and 11, characterized in that the polymer belongs to the group comprising the polymethycyclates, the polycarbonates, the polysterene, the derivates of cellulosis, the polysulfone.

13. An information support according to claim 12, characterized in that the polymer is plasticized so as to reduce its deterioration temperature.

14. An information support according to claim 13, characterized in that the plasticizer incorporated into the polymer is an adipate, azelate, isodecyl sebacate, butoxyethyl sebacate or ethylhexyl sebacate, or an isodecyl phtalate, cyclohexyl phtalate or ethylhexyl phtalate.

15. An information support according to any one of the claims 13 and 14, characterized in that the metal layer (3) is separated from the organic sublayer (2) by an intermediate metal sublayer (30).

16. An information support according to any one of the claims 9 to 15, characterized in that it comprises means to protect the metal layer (3).

17. An information support according to claim 16, characterized in that one of these means consists of an electrolytic thick deposit of metal effected after inscription of the information.

18. An information support according to claim 9, characterized in that the metal layer (3) is covered with a metal deposit which cooperates with said layer in order to form a resisting imprint.

FIG.1

FIG.2

FIG.3

FIG.4

FIG.5

S/B

E$_V$

E

FIG. 6

FIG. 7

FIG. 8

FIG. 9

FIG. 10

# FIG. 11

# FIG. 12